# EUROPEAN PATENT APPLICATION

(11) **EP 2 243 355 A1**
(43) Date of publication of application: **27.10.2010**
(21) Application number: 10003891.8
(22) Date of filing: 13.04.2010
(51) Int. Cl.: A01K 1/015

(54) **Modular ventilated flooring in particular for stables and /or piggeries**

(30) Priority: 15.04.2009 IT MO20090089
(71) Applicant: Lusetti, Sergio, 41013 Castelfranco Emilia (MO) (IT)
(72) Inventor: Lusetti, Sergio, 41013 Castelfranco Emilia (MO) (IT)

(57) **Abstract**

Modular ventilated flooring in particular for stalls and/or piggeries which comprises: - a first plurality of lower modular elements (I) designed to be laid upon an external supporting surface (2), shaped and configured to mutually abut each other in such a way as to define, between any two consecutively adjacent lower modular elements (I), at least one upwardly concave opening (3); - a second plurality of upper modular elements (4) which may he associated so as to define at least a treading surface, each of which consists of at least two mutually integral components (49). The components (49) are configured to be coupled on said lower modular elements (1) so that between any two consecutively adjacent upper modular elements (4) there is defined at least one through gap (5), which is positioned above said concave opening (3). The upwardly concave opening (3) is suitable for accommodating an open channel-shaped profited section: in the coupling between the lower modular elements (1) and the upper modular elements (4) there is defined a free space (6) suitable for accommodating pipes (7) with nozzles for blowing out gaseous fluid.

## Description

The present invention relates to modular ventilated flooring in particular for stalls and/or piggeries.

Specifically, but not exclusively, it may be usefully employed in all cases requiring the drainage of liquid waste and faeces, which are produced by the animals and deposited on the treading surface.

There is known a type of flooring for stalls or piggeries as illustrated in patent no. 1262612, granted on 4,07,1996 and extended to Europe with no. ES2110729, filed on behalf of the same applicant, which is suitable for draining off from the treading surface the solid and liquid excrements produced by animals and is obtained by sinking a series of upwardly open channels in a layer of concrete which defines the treading surface of the floor itself. The latter, once installation is completed, is furrowed with a series of gaps that communicate directly with underlying drainage channels in which the excrements produced by the animals collect. The channels are made up of rigid tubular profiled sections that are sunk in the concrete with a suitable laying method.

Said flooring presents various disadvantages, most of which deriving from the fact that it is realised with in-situ cast concrete; therefore, any changes or repairs to the drainage channels require the demolition of the floor.

There is also known a method for realising floors as illustrated in patent no. 1341389, granted on 16.10.2007 and filed on behalf of the same applicant, in which a first plurality of upper modular elements suitable for forming the treading surface for animals, provided with gaps, can be fit onto a second plurality of lower elements that are disposed transversely to the upper ones and are shaped so as to support the channels correctly positioned below the gaps. This latter method of realization is limited by the fact of requiring modular elements and above all self-supporting channels of even greater dimensions (lengths), at least such as to cover the distance existing between the washing liquid intake and collection manifolds.

One object of the present invention is to remedy the above-mentioned drawbacks and limitations of the prior art according to what is described in the claims.

In particular, the present invention aims to realize flooring with nodular elements that docs not require pre-formed connecting channels, which are usually made up of special profiled sections that are rather bulky to transport.

Another object of the present invention is to enable the realization of modular elements composing it which are characterised by modest dimensions, and thus particularly suitable for transport and storage, and very simple forming techniques allowing the use of simple tools.

A further object of the present invention is to enable the realization of an effective ventilation system directly at floor level.

The advantages of the invention are the possibility of enabling easy access to the drainage channels at all times without the need for demolition work, the possibility of easily replacing worn elements, thus facilitating all maintenance jobs, and the possibility of installing the floor without the need to prepare a concrete bed.

Further characteristics and advantages of the present invention will become more apparent from the following detailed description of some preferred, but not exclusive, embodiments of the invention in question, illustrated below by way of non-restrictive example in the appended drawings, in which:

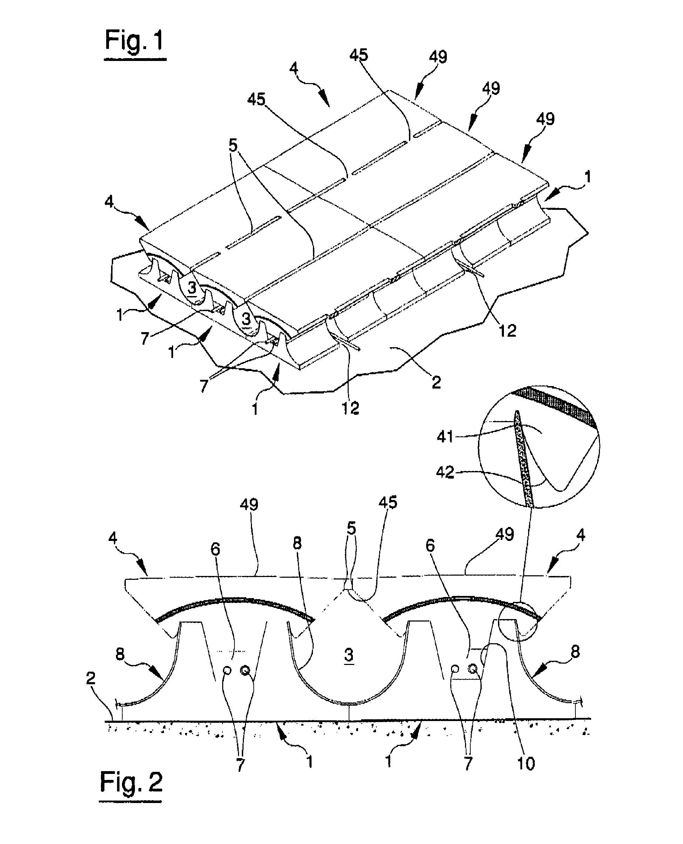

- figure 1 shows a schematic, partial perspective view thereof;
- figure 2 shows an enlarged schematic front view of a portion of the flooring represented in figure 1, which is formed according to a plane normal to the longitudinal dimension of the coupled modular elements; a detail is shown of the connecting joint between the coupled modular elements and the open channel-shaped profiled section 8;
- figure 3 shows an exploded perspective view of part of the flooring of figure 1;
- figure 4 shows an enlarged schematic front view of a portion of the flooring represented in figure 1, which is formed according to a plane normal to the longitudinal dimension of the coupled modular elements; a detail may be seen of the connecting joint between the modular elements and the open channel-shaped profiled section 8 prior to coupling.

The figures mentioned show a portion of ventilated modular flooring in particular for stalls and/or piggeries, which is realized with modular elements. It comprises a first plurality of lower modular elements 1 designed to be laid upon an external supporting surface 2 which need not necessarily be made of masonry or formed by a concrete platform or slab, but may rather be made up of a simple surface of gravel or in any case of aggregate material. Said surface must be realized with a preestablished slope (e.g. 2%), such as to enable the drainage of liquid waste.

The lower modular elements 1 of the first plurality are shaped and configured to mutually abut each other in such a way as to define, between any two adjacent, i.e. consecutively abutting, lower modular elements 1, at least one upwardly concave opening 3. The lower modular elements 1 are preferably only laid in a row one next to the other. It is also envisaged that, at more or less regular intervals, a space (12) is left between two lower modular elements 1 so as originate a sort of transverse channel that crosses the whole section of flooring and is suitable for accommodating conduits for carrying fluids, cables, etc.

A second plurality of upper modular elements 4 is provided to define at least a treading surface for the animals. For this purpose, the upper modular elements 4 are designed to be coupled simply by being laid upon respective lower modular elements 1 so that between any two adjacent, i.e. consecutively disposed upper modular elements 4 coupled onto corresponding lower modular elements I, likewise adjacent, i.e. consecutively disposed, there is defined at least a through gap 5, which is positioned above the concave opening 3. This concave opening 3 is upwardly open by virtue of the presence of a through gap 5. The lower modular elements 1 have a prismatic-cylindrical shape characterised by a constant cross section which is symmetrical in relation to a vertical median axis and has a central recess 10 and two lateral concave-shaped portions 11, with the concavities turned outward.

Each upper modular element 4 consists of at least two mutually integral components 49, which are symmetrically shaped and disposed relative to a longitudinal median direction, along which there are present through gaps 5' analogous to said gaps 5.

Each of the two components 49 has an elongated shape with a constant cross section, which may be approximately likened overall to a "T", which is symmetrical in relation to a vertical median axis and has a central downward projecting part 40 intended to be inserted, without obstacles, at least partly inside the recess 10 of one or more lower elements 1 so that between the downward projecting part 40 and the bottom part of the recess 10 a free space 6 is defined.

The two components 49, which form an upper modular element 4 realized in a single piece, are mutually integral in that they are joined by means of connections 45 disposed so as to form the through gaps 5', which are aligned with and have the same shape and size characteristics as the gaps 5.

The free space 6 is dimensioned so as to accommodate pipes 7 provided, for example, with nozzles for blowing gaseous fluid (air).

The upwardly concave opening 3 is configured to accommodate an open channel-shaped profiled section 8. Each concave-shaped portion 11 of each lower modular element I is configured so as to form, together with the corresponding concave-shaped portion 11 of the abutting lower modular element 1, the upwardly concave opening 3, which is thus formed at the time of installation by joining, or rather by simply abutting, the two concave-shaped portions 11 belonging to two adjacent components 49.

The open channel-shaped profiled section 8 has a cross-sectional dimension no smaller than the overall dimension of said upwardly concave opening 3, and is upwardly bounded by the components 49 of the adjacent upper modular elements 4. Said dimension is in any case such as to bring the upper edges of the open channel-shaped profiled section 8 into contact with the downwardly directed walls of the components 49 themselves, which are coupled on two corresponding consecutively adjacent lower modular elements 1 so as to form the concave opening 3, in which open channel-shaped profiled section 8 is seated.

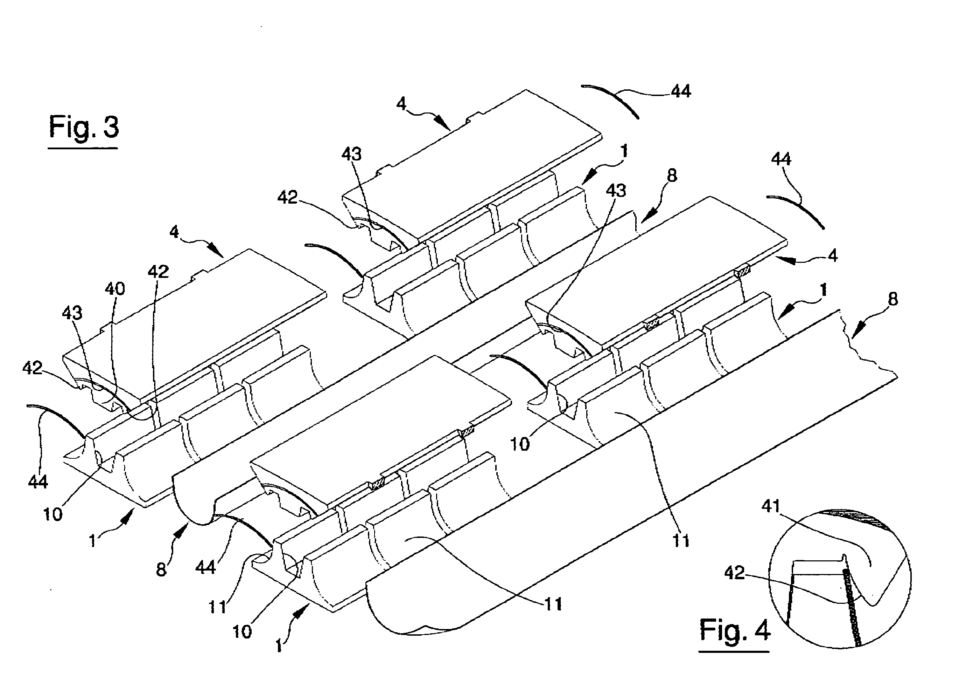

The geometry of the seats by means of which the connection between the upper and lower modular elements and the open channel-shaped profiled section 8 is achieved serves to provide an effective hold (see fig. 4) as a result of the partial force fitting of the edges of the profiled section itself at the time of assembly. The open channel-shaped profiled section 8 is a "sui generis" profiled section, in the sense that it takes on its profiled shape only when it is inserted and rested against the surfaces of the concave opening 3. It is in fact fashioned from a flexible sheet of elastically deformable material resistant to the aggressive chemical substances present in the liquid waste and faeces of animals.

In other words, said profiled section does not have a shape of its own, but rather takes on one only when forced to adapt to the surfaces of the concave opening 3. Prior to insertion, the profiled section has the form of a substantially flat and flexible strip which has predetermined dimensions and can normally be cut from a sheet which, for transport purposes and to save space, can easily be rolled into a sort of reel.

Adherence to the walls of the concave opening 3 is obtained by forming the width of said strip in such a way that, once it is fitted into place, a "forcing" condition occurs which makes the strip take on the channel shape of the concave opening 3 and adhere to the walls of the latter.

The above-described condition is obtained by dimensioning the strip, in terms of width, so that the portions of the downwardly directed walls of the upper modular elements 4 exert a non-null pressure against the upper edges of the strip which, already inserted in the concave opening 3, forms the open channel-shaped profiled section 8.

In particular, the downwardly directed walls of the components 49 of the upper modular elements 4 are provided with seats 41 shaped to receive and forcibly couple with the upper edges of said open channel-shaped profiled section 8, said seats being bounded by lower projecting appendages 42. The seats 41 and the lower projecting appendages 42 are shaped so that at least the end portions, including the borders of the upper edges of the strip, which, already inserted in the concave opening 3, forms the open channel-shaped profiled section 8, are suitable for accommodating said borders. In particular, the lower projecting appendages 42 are shaped so as to achieve, in cooperation with the abutting surfaces of said lower nodular elements 1, said forced coupling.

In order to prevent liquid waste or faeces on the treading surface formed by the upper surfaces of the components 49 from infiltrating between the front surfaces thereof and reaching and accumulating in the free space 6, a simple seal system is provided.

In fact, each component 49 has, on its front surfaces intended to abut with the corresponding front surfaces of every other component 49, at least one seat 43 suitable for accommodating a sealing gasket 44.

The seat 43 has a shape that is preferably symmetrical in relation to a vertical median axis (axis of symmetry) of the front section of the component 49 and may be of the sloping or arched type, in any case with the concavity turned downward. Said scat and the associated sealing gasket 44 have the characteristic of extending, on either end, at least over the seats 41 so that any infiltrations will drain off directly into the channel.

The lower modular elements 1 have a shorter length than the components 49 they are coupled with. The possibility of laying the lower modular elements 1 in such a way that, at more or less regular intervals, a space 12 is left between two lower modular elements I so as to originate a sort of transverse channel that crosses the whole section of flooring, allows for an extremely easy realization of an entire system of transverse channels, suitable for accommodating conduits for carrying fluids, cables, etc., which is added to the longitudinal channel system originated by the openings 6 and moreover permits an effective circulation of air to be achieved in the lower part of the floor.

This helps to keep the humidity of the flooring under control and provide air at the level of the floor itself, which is highly advantageous for maintaining optimal conditions of hygiene.

The invention has the advantage of being able to be realized using only two types of modular elements made of, for example, but not only, a concrete mix, and which have modest dimensions and are thus particularly suitable for transport and storage. These elements can also be fabricated using very simple traditional forming techniques which permit the use of simple tools.

The floor is easy to assemble and structured so as to achieve an effective ventilation system directly at floor level, which is particularly important for the heath of animals.

Other advantages of the invention are the possibility of enabling easy access to the drainage channels at all times without the need for demolition work, the possibility of easily replacing worn elements, thus facilitating all maintenance jobs, and the possibility of installing the floor without the need to prepare a concrete bed.

## Claims

1. Modular ventilated flooring in particular for stalls and/or piggeries, **characterised in that it** comprises: - a first plurality of lower modular elements (1) designed to be laid upon an external supporting surface (2), shaped and configured to mutually abut each other in such a way as to define, between any two consecutively adjacent lower modular elements (1), at least one upwardly concave opening (3); - a second plurality of upper modular elements (4) which may be associated so as to define at least a treading surface and configured for such purpose to be coupled with said lower modular elements (1) so that between any two upper modular elements (4) consecutively disposed and coupled to corresponding consecutively adjacent lower modular elements (1) there is defined at least one through gap (5), which is positioned above said concave opening (3); each of said upper modular elements (4) consisting of at least two mutually integral components (49), which are symmetrically shaped and disposed relative to a longitudinal median direction, along which there are present through gaps (5') analogous to said gaps (5); said lower modular elements (1) having a prismatic or cylindrical shape with a constant cross section that is symmetrical in relation to a vertical median axis and has a central recess (10) and two lateral concave-shaped portions (11); each said component (49) of said upper modular elements (4) having an elongated shape with a constant cross section that is symmetrical in relation to a vertical median axis and has a central downward projecting part (40) intended to be inserted at least partly inside said recess (10) so that between said downward projecting part (40) and the bottom part of said recess (10) a free space (6) is defined; said free space (6) being suitable for accommodating pipes (7) with nozzles for blowing out gaseous fluid; said upwardly concave opening (3) being suitable for accommodating an open channel-shaped profiled section (8); it being envisaged that said lower modular elements (1) are of shorter length than said components (49).

2. Flooring according to claim 1, **characterised in that** each of said concave-shaped portions (11) of each of said lower modular elements (1) is designed to form, together with the corresponding concave-shaped portion (11) of the abutting lower modular element (1), said upward concave opening (3).

3. Flooring according to claim 1 or 2, **characterised in that** said open channel-shaped profiled section (8) has a cross-sectional dimension no smaller than the overall dimension of said upward concave opening (3) upwardly bounded by said adjacent upper modular elements (4), and in any case such as to bring the upper edges thereof into contact with the downwardly directed walls of the upper modular elements (4) themselves, which are coupled to two corresponding consecutively adjacent lower modular elements (1) so as to form said concave opening (3).

4. Flooring according to claim 3, **characterised in that** said open channel-shaped profiled section (8) is fashioned from a flexible sheet of elastically deformable material resistant to the aggressive chemical substances present in the liquid waste and faeces of animals.

5. Flooring according to claim 4, **characterised in that** the downwardly directed walls of the upper modular elements (4) are provided with seats (41) shaped to receive and forcibly couple with the upper edges of said open channel-shaped profiled section (8), said seats being bounded by lower projecting appendages (42); said lower projecting appendages (42) being shaped so as to achieve, in cooperation with the abutting surfaces of said lower modular elements (1), said forced coupling.
